# EUROPÄISCHE PATENTANMELDUNG

(11) **EP 3 480 632 A1**
(43) Veröffentlichungstag der Anmeldung: **08.05.2019**
(21) Anmeldenummer: 18197919.6
(22) Anmeldetag: 01.10.2018
(51) Int. Cl.: G02B 5/20, G02B 5/22, G02C 7/10

(54) **OPTISCHE FILTEREINRICHTUNG UND OPTISCHE VORRICHTUNG MIT WENIGSTENS EINER OPTISCHEN FILTEREINRICHTUNG**

(30) Priorität: 02.11.2017 DE 102017125640
(71) Anmelder: Steiner-Optik GmbH, 95448 Bayreuth (DE)
(72) Erfinder: FISCHBACH, Manfred, 95236 Stammbach (DE)
(74) Vertreter: Hafner & Kohl

(57) **Zusammenfassung**

Optische Filtereinrichtung (1), die in Abhängigkeit eines Transmissionsspektrums (2, 3) der optischen Filtereinrichtung (1) für elektromagnetische Strahlung durchlässig ist, wobei die optische Filtereinrichtung (1) bei der Betrachtung einer Szenerie (4) aus einem Objekt (5) und einem Hintergrund (6) dazu ausgebildet ist, elektromagnetische Strahlung wenigstens eines Dämpfungsspektralbereichs (7 - 9) zumindest teilweise zu filtern, wobei der wenigstens eine Dämpfungsspektralbereich (7 - 9) der optischen Filtereinrichtung (1) in Abhängigkeit eines für einen bestimmten Hintergrund (6) charakteristischen Hintergrundreflektanzspektrums (10) und eines für ein bestimmtes Objekt (5) charakteristischen Objektreflektanzspektrums (11) festgelegt ist, wobei die optische Filtereinrichtung (1) dazu ausgebildet ist, eine Differenz zwischen Hintergrundreflektanzspektrum (10) und Objektreflektanzspektrum (11) in wenigstens einem Teilspektrum (12, 13) des Transmissionsspektrums (2, 3) zu verstärken.

## Beschreibung

Die Erfindung betrifft eine optische Filtereinrichtung, die in Abhängigkeit eines Transmissionsspektrums der optischen Filtereinrichtung für elektromagnetische Strahlung durchlässig ist, wobei die optische Filtereinrichtung bei der Betrachtung einer Szenerie aus einem Objekt und einem Hintergrund dazu ausgebildet ist, elektromagnetische Strahlung wenigstens eines Dämpfungsspektralbereichs zumindest teilweise zu filtern.

Derartige optische Filtereinrichtungen sind aus dem Stand der Technik hinlänglich bekannt. Diese weisen ein Transmissionsspektrum auf, das festlegt, inwieweit elektromagnetische Strahlung die optische Filtereinrichtung passieren kann. Das Transmissionsspektrum gibt sonach an, welcher Anteil elektromagnetischer Strahlung einer bestimmten Wellenlänge bzw. bestimmter Wellenlängenbereiche durch die optische Filtereinrichtung hindurch strahlen kann. Es ist selbstverständlich ebenfalls möglich, statt dem Transmissionsspektrum anzugeben, welcher Teil der elektromagnetischen Strahlung von der optischen Filtereinrichtung absorbiert bzw. reflektiert wird.

Ferner ist bekannt, dass optische Filtereinrichtungen dazu verwendet werden können, bestimmte Objekte besser wahrzunehmen oder elektromagnetische Strahlung einer bestimmten Wellenlänge auszublenden bzw. zu filtern. So sind beispielsweise Kantenfilter bekannt, die elektromagnetische Strahlung bis zu einer bestimmten Wellenlänge filtern und oberhalb bzw. unterhalb dieser bestimmten Wellenlänge für elektromagnetische Strahlung durchlässig sind.

Dabei wird jedoch zumeist ein sehr großer Anteil des Transmissionsspektrums gedämpft, sodass die Helligkeit, mit der die Szenerie wahrgenommen wird, stark reduziert ist. Insbesondere in Situationen bzw. bei der Betrachtung von Szenerien, die grundsätzlich eine geringe Helligkeit bzw. wenig Restlicht aufweisen, wie beispielsweise die Jagd bei Dämmerung, ist das zusätzliche Bedämpfen eines breiten Wellenlängenbereichs des Transmissionsspektrums nachteilig, da dadurch die Helligkeit zusätzlich reduziert und die Objektwahrnehmung erschwert wird.

Ferner wird durch derartige Kantenfilter eine Verschiebung der Farbörter der Szenerie bewirkt, die von einem Betrachter nicht mehr als angenehm bzw. natürlich wahrgenommen wird, sondern durch die Verschiebung der Farbörter resultieren unnatürliche und unangenehme Farbdarstellungen, die von Benutzern als störend empfunden werden.

Der Erfindung liegt daher die Aufgabe zugrunde, eine optische Filtereinrichtung anzugeben, die die Wahrnehmbarkeit eines Objekts vor einem Hintergrund verbessert.

Die Aufgabe wird durch eine optische Filtereinrichtung mit den Merkmalen des Anspruchs 1 gelöst. Vorteilhafte Ausgestaltungen sind Gegenstand der Unteransprüche.

Der Kern der Erfindung ist darin zu sehen, dass der wenigstens eine Dämpfungsspektralbereich der optischen Filtereinrichtung in Abhängigkeit eines für einen bestimmten Hintergrund charakteristischen Hintergrundreflektanzspektrums und eines für ein bestimmtes Objekt charakteristischen Objektreflektanzspektrums festgelegt ist, wobei die optische Filtereinrichtung dazu ausgebildet ist, eine Differenz zwischen Hintergrundreflektanzspektrum und Objektreflektanzspektrum in wenigstens einem Teilspektrum des Transmissionsspektrums zu verstärken.

Demnach ist vorgesehen, den wenigstens einen Dämpfungsspektralbereich in Abhängigkeit eines Hintergrundreflektanzspektrums und eines Objektreflektanzspektrums zu wählen bzw. festzulegen. Dabei wird von einem bestimmten Hintergrund ausgegangen, der typischerweise für einen definierten Anwendungsfall vorliegt. Beispielweise kann dies im Falle einer jagdlichen Anwendung die entsprechende in dem Gebiet anzutreffende Vegetation sein. Diese legt durch das typischerweise zu Grunde liegende Reflektanzspektrum der in der Vegetation vorkommenden Pflanzen das Hintergrundreflektanzspektrum fest. Dieses kann beispielweise in Form einer Mittelung über die anzutreffenden Pflanzenarten bzw. deren Reflektanzspektren definiert werden.

Ebenso fließt das Objektreflektanzspektrum in die Festlegung des wenigstens einen Dämpfungsspektralbereichs ein, indem das ein für ein bestimmtes Objekt oder eine Gruppe von Objekten, beispielsweise Rotwild, charakteristisches Reflektanzspektrum ermittelt wird. Auch hierbei kann aus einzelnen Reflektanzspektren für bestimmte Objekte, die in dem konkreten Anwendungsfall betrachtet bzw. erwartet werden, das Objektreflektanzspektrum bestimmt werden. Anschließend kann der wenigstens eine Dämpfungsspektralbereich in Abhängigkeit des Hintergrundreflektanzspektrums und des Objektreflektanzspektrums festgelegt werden. Das Beispiel der jagdlichen Szenerie wieder aufgreifend, kann das zu betrachtende Objekt in der Szenerie ein Wildtier sein, beispielweise Rotwild. Dazu wird das Objektreflektanzspektrum anhand des Reflektanzspektrums des Fells oder mehrerer verschiedener Fellfärbungen festgelegt.

Anschließend kann bevorzugt ermittelt werden, in welchen Bereichen des Transmissionsspektrums sich das Hintergrundreflektanzspektrum von dem Objektreflektanzspektrum unterscheidet. In wenigstens einem dieser Bereiche kann folglich ein Dämpfungsspektralbereich angesetzt bzw. festgelegt werden, derart, dass eine bereits vorliegende Differenz zwischen dem Hintergrundreflektanzspektrum und dem Objektreflektanzspektrum in dem entsprechenden, dem Dämpfungsspektralbereich zugeordneten Teilspektrum des Transmissionsspektrums verstärkt wird.

Mit anderen Worten werden das Objektreflektanzspektrum und das Hintergrundreflektanzspektrum analysiert bzw. verglichen und wenigstens ein Unterschied zwischen den beiden Spektren ermittelt. Dieser Unterschied wird durch den wenigstens einen Dämpfungsspektralbereich verstärkt, sodass die Objektwahrnehmung bei der Betrachtung der Szenerie durch die optische Filtereinrichtung verbessert wird.

Es wird sonach vorgeschlagen, das Transmissionsspektrum der optischen Filtereinrichtung in wenigstens einem Dämpfungsspektralbereich derart zu wählen, dass eine Differenz zwischen einem Anteil elektromagnetischer Strahlung, die von dem Hintergrund reflektiert wird und elektromagnetischer Strahlung, die von dem Objekt reflektiert wird, verstärkt wird, sodass das Objekt vor dem Hintergrund stärker hervortritt und von dem Betrachter somit besser und schneller erfasst werden kann. Dadurch ist gewährleistet, dass der Betrachter Objekte wahrnehmen kann, die er normalerweise, ohne die optische Filtereinrichtung nicht wahrnehmen könnte oder Objekte zumindest verbessert wahrnehmen kann.

Selbstverständlich ist die optische Filtereinrichtung nicht auf das Beispiel der jagdlichen Szenerie beschränkt, insbesondere sind weitere Anwendungsgebiete möglich, bei denen die Wahrnehmung eines bestimmten Objekts vor einem bestimmten Hintergrund erforderlich ist, wie beispielsweise in Anwendungsfällen in der Seenotrettung, bei der bestimmte Signalfarben, beispielsweise einer (beispielsweise orangenen oder roten) Schwimmweste oder einer Rettungsinsel, vor einem Gewässer, beispielweise der (typischerweise blauen) Meeresoberfläche, wahrgenommen werden müssen. Entsprechend des zu erwartenden Hintergrunds und des zu betrachtenden bzw. des gesuchten Objekts in der Szenerie verändern sich selbstverständlich das Hintergrundreflektanzspektrum und das Objektreflektanzspektrum, sodass für verschiedene Anwendungsgebiete verschiedene optische Filtereinrichtungen ausgelegt werden.

Besonders bevorzugt kann bei der optischen Filtereinrichtung vorgesehen sein, dass die optische Filtereinrichtung dazu ausgebildet ist, von dem Hintergrund reflektiertes Licht und/oder von dem Objekt reflektiertes Licht derart zu verändern, dass ein Abstand eines ersten Farborts des von dem Hintergrund reflektierten Lichts von einem zweiten Farbort des von dem Objekt reflektierten Lichts in einem Farbraum bei gegebener Beleuchtung nach der Filterung erhöht ist.

Demnach wird vorgeschlagen, das Licht, also die elektromagnetische Strahlung, die von dem Hintergrund und/oder dem Objekt reflektiert wird und durch die optische Filtereinrichtung fällt, entsprechend zu filtern, sodass die Farbörter des Hintergrunds und des Objekts nach der Filterung weiter auseinanderliegen. Als Farbort wird dabei ein Punkt in einem, insbesondere gleichabständigen, Farbraum (beispielsweise der u' v'- oder der CIELAB-Farbraum) also definierte Koordinaten in einem Farbraum verstanden. Die entsprechenden Koordinaten repräsentieren dabei die Farbe des von dem Hintergrund bzw. des von dem Objekt reflektierten Lichts, also letztlich die Farbe in der dieser bzw. dieses bei einer gegebenen Beleuchtung erscheint. In einem gleichabständigen Farbraum wird der Abstand der beiden Farbörter durch die Filterung vergrößert. Als gegebene Beleuchtung kann eine definierte Lichtquelle verwendet werden, beispielsweise eine für die Szenerie typische Lichtquelle, wie beispielsweise die Sonne. Als Beispiel für die Sonne als Lichtquelle kann die Normlichtart nach DIN D65 genutzt werden.

Mit anderen Worten liegen die Farbörter, in denen der Hintergrund bzw. ein spezifischer Teil des Hintergrunds und das Objekt erscheinen, vor der Filterung bzw. bei einer Betrachtung ohne die optische Filtereinrichtung näher beieinander als nach der Filterung bzw. bei einer Betrachtung der Szenerie durch die optische Filtereinrichtung. Durch den erhöhten Abstand der beiden Farbörter wird das bestimmte Objekt vor dem bestimmten Hintergrund von dem Betrachter besser wahrgenommen, da es sich farblich besser von dem Hintergrund absetzt. Die Wahrnehmbarkeit bzw. die optische, insbesondere farbliche, Unterscheidbarkeit des Objekts (Farbunterscheidungsfähigkeit) vor dem Hintergrund wird somit erhöht.

Jeder der Farbörter bzw. dessen Koordinaten werden durch die Farbsättigung und die Helligkeit bestimmt, sodass ein Verschieben des Farbortes durch eine Veränderung der Sättigung und/oder der Helligkeit erfolgen kann. Die optische Filtereinrichtung ist somit dazu ausgebildet, von dem Hintergrund reflektiertes Licht und/oder von dem Objekt reflektiertes Licht hinsichtlich der Farbsättigung und/oder der Helligkeit zu verändern. In entsprechend gefilterten Szenerien können Objekte somit gesättigter und/oder heller wahrgenommen werden, wobei der Hintergrund entsprechend dunkler und/oder entsättigter zurücktritt.

Gemäß einer bevorzugten Ausgestaltung der optischen Filtereinrichtung kann vorgesehen sein, dass der wenigstens eine Dämpfungsspektralbereich schmalbandig ist, vorzugsweise zwischen 5 nm und 50 nm. Durch das schmalbandige Ausbilden des Dämpfungsspektralbereichs wird vorteilhafterweise erreicht, dass eine Differenz zwischen dem Hintergrundreflektanzspektrum und dem Objektreflektanzspektrum an der definierten Stelle des Dämpfungsspektralbereichs im Transmissionsspektrum verstärkt werden kann und gleichzeitig kann sichergestellt werden, dass der gefilterte Anteil elektromagnetischer Strahlung gering bleibt, insbesondere im Vergleich zu bekannten breitbandigen Filtern, sodass der Transmissionsgrad im Vergleich hoch ist und die Szenerie mit ausreichender Helligkeit wahrgenommen werden kann. Demnach wird das reflektierte Licht von der optischen Filtereinrichtung bevorzugt derart schmalbandig gefiltert, dass die Auswirkungen auf die Helligkeit der Szenerie gering sind, die Differenzen zwischen Hintergrundreflektanzspektrum und Objektreflektanzspektrum aber verstärkt werden.

Eine weitere vorteilhafte Ausgestaltung der optischen Filtereinrichtung kann darin bestehen, dass sie einen ersten Dämpfungsspektralbereich von 525 nm bis 545 nm oder einen ersten Dämpfungsspektralbereich von 460 nm bis 530 nm und einen zweiten Dämpfungsspektralbereich von 590 nm bis 640 nm aufweist. Bei Ausbildung eines ersten Dämpfungsspektralbereichs von 525 nm bis 545 nm hat sich vorteilhafterweise gezeigt, dass dort insbesondere bei der Verwendung in jagdlichen Szenerien eine optimale Bedämpfung von Charakteristiken im Hintergrundreflektanzspektrum auftritt. Dadurch können die Differenzen zwischen dem Hintergrundreflektanzspektrum der Vegetation und dem Objektreflektanzspektrum, beispielweise von Rotwild, verstärkt werden, da ein Großteil des Lichts von dem Hintergrund aufgrund des Chlorophyllanteils in dem entsprechenden Wellenlängenbereich reflektiert wird, welcher Anteil durch den ersten Dämpfungsspektralbereich in dem beschriebenen Intervall gezielt bedämpft wird. Durch die Dämpfung dieses Bereichs tritt der Hintergrund gegenüber dem Objekt verstärkt zurück, sodass die Objektwahrnehmung verbessert ist.

In der zweiten vorgeschlagenen Ausgestaltung, mit einem ersten Dämpfungsspektralbereich von 460 nm bis 530 nm und einem zweiten Dämpfungsspektralbereich von 590 nm bis 640 nm können insbesondere die Unterschiede zwischen dem Hintergrundreflektanzspektrum, beispielweise von Vegetation, und dem Objektreflektanzspektrum, beispielsweise von Rotwild, verstärkt werden, da sich gezeigt hat, dass die beiden Spektren in diesen Bereichen Differenzen aufweisen, die aufgrund der gezielten Bedämpfung entsprechend verstärkt werden können. Somit wird die Unterscheidbarkeit zwischen Objekt und Hintergrund verbessert, da die einzelnen Charakteristiken in den Reflektanzspektren entsprechend berücksichtigt werden.

Daneben betrifft die Erfindung eine optische Vorrichtung mit wenigstens einem optischen Element und wenigstens einer erfindungsgemäßen optischen Filtereinrichtung. Selbstverständlich sind sämtliche Vorteile, Einzelheiten und Merkmale die in Bezug auf die optische Filtereinrichtung beschrieben wurden auf die optische Vorrichtung übertragbar und umgekehrt. Die optische Filtereinrichtung kann dabei in die optische Vorrichtung integriert sein, beispielsweise in ein Zielfernrohr oder ein Fernglas, es ist jedoch ebenfalls möglich, die optische Filtereinrichtung als zusätzliches Bauelement bzw. zusätzliche Baugruppe auszubilden, die mit der optischen Vorrichtung verbunden werden kann. Die optische Filtereinrichtung kann sonach auf einem optischen Element aufgebracht sein oder beispielsweise als zusätzliches Element auf die optische Vorrichtung aufsetzbar sein.

Bei der optischen Vorrichtung kann besonders bevorzugt vorgesehen sein, dass die wenigstens eine optische Filtereinrichtung okularseitig und/oder objektivseitig und/oder auf einem Strahlteiler und/oder auf einer Strichplatte angeordnet ist. Insbesondere ist die Kombination mehrerer optischer Filtereinrichtungen, von denen vorzugweise verschiedene, auf denselben oder verschiedenen Bauteilen bzw. im Allgemeinen auf optisch wirksamen Flächen der optischen Vorrichtung angeordnet sind. Die elektromagnetische Strahlung, die durch die optische Vorrichtung fällt, wird sonach durch Filterung durch die einzelnen optischen Filtereinrichtungen, die auf den jeweiligen optisch wirksamen Flächen aufgebracht oder angeordnet sind, gefiltert.

Gemäß einer weiteren Ausgestaltung der optischen Vorrichtung können wenigstens zwei optische Filtereinrichtungen vorgesehen sein, die untereinander austauschbar sind. Dadurch kann gewährleistet werden, dass die optische Vorrichtung für mehr als einen bestimmten Anwendungsfall verwendet werden kann, indem die entsprechenden optischen Filtereinrichtungen für den vorliegenden Anwendungsfall ausgewählt werden bzw. die optischen Filtereinrichtungen entsprechend ausgetauscht werden. Dadurch wird die optische Vorrichtung für eine Vielzahl von Anwendungsfällen einsetzbar, da lediglich die benötigten Filtereinrichtungen entsprechend ausgetauscht werden müssen und die optische Vorrichtung als solche unverändert bleiben kann.

Eine weitere bevorzugte Ausgestaltung der optischen Vorrichtung kann darin bestehen, dass wenigstens eine optische Filtereinrichtung selektiv in den Strahlengang des wenigstens einen optischen Elements einbringbar ist. Demnach kann die wenigstens eine optische Filtereinrichtung in den Strahlengang eingebracht und aus diesem heraus genommen werden, sodass die Szenerie sowohl ohne die optische Filtereinrichtung als auch mit der optischen Filtereinrichtung betrachtet werden kann. Der Anwender kann letztlich entscheiden, ob bzw. wann die Szenerie durch die optische Filtereinrichtung betrachtet werden soll, oder ob diese "natürlich" betrachtet werden soll. Somit kann die optische Vorrichtung für allgemeine bzw. herkömmliche Anwendungen verwendet werden und die optische Filtereinrichtung selektiv, bei Bedarf, in den Strahlengang eingebracht werden, beispielsweise durch Einschwenken oder Einschieben.

Dabei kann besonders bevorzugt vorgesehen sein, dass wenigstens eine optische Filtereinrichtung in den Strahlengang des wenigstens einen optischen Elements, insbesondere mittels einer Schenkmechanik, einschwenkbar ist. Dies kann beispielweise eine innerhalb der optischen Vorrichtung angeordnete Schenkmechanik sein, die über eine entsprechende Betätigung die optische Filtereinrichtung in den Strahlengang des wenigstens einen optischen Elements einschwenkt oder einschiebt. Ebenso ist es möglich, die optische Filtereinrichtung, beispielsweise in Form einer Klappe, außerhalb der optischen Vorrichtung anzuordnen und diese selektiv in den Strahlengang des wenigstens einen optischen Elements einzuschwenken oder einzuschieben.

Gemäß einer weiteren vorteilhaften Ausgestaltung der optischen Vorrichtung kann das optische Element wenigstens einen ersten Teilbereich und wenigstens einen zweiten Teilbereich aufweisen, wobei elektromagnetische Strahlung durch das optische Element in dem wenigstens einen ersten Teilbereich mittels der wenigstens einen optischen Filtereinrichtung oder in Abhängigkeit wenigstens eines ersten Dämpfungsspektralbereichs der optischen Filtereinrichtung gefiltert ist und elektromagnetische Strahlung durch das optische Element in dem wenigstens einen zweiten Teilbereich nicht mittels der optischen Filtereinrichtung oder in Abhängigkeit wenigstens eines zweiten Dämpfungsspektralbereichs der optischen Filtereinrichtung mittels der optischen Filtereinrichtung gefiltert ist. Die entsprechende wenigstens eine optische Filtereinrichtung die dem optischen Element zugeordnet ist, weist sonach wenigstens zwei Teilbereiche auf, wobei ein Teilbereich ungefiltert ist, d.h., dass elektromagnetische Strahlung durch den zweiten Teilbereich nicht oder nicht mittels desselben Dämpfungsspektralbereichs des ersten Teilbereichs der optischen Filtereinrichtung gefiltert ist. Eine optische Filterung aufgrund des Transmissionsspektrums durch das wenigstens eine optische Element als solches wird hierbei nicht berücksichtigt.

Elektromagnetische Strahlung bzw. der Strahlengang, der durch den ersten Teilbereich verläuft, wird demnach in jedem Fall mittels der optischen Filtereinrichtung gefiltert, solange sich diese im Strahlengang befindet. Im zweiten Teilbereich findet entweder keine Filterung durch die optische Filtereinrichtung statt oder die elektromagnetische Strahlung durch den zweiten Teilbereich wird in Abhängigkeit eines von dem ersten Dämpfungsspektralbereich abweichenden zweiten Dämpfungsspektralbereichs gefiltert. Selbstverständlich können der erste und der zweite Teilbereich beliebig viele verschiedene Dämpfungsspektralbereiche aufweisen. Ebenso ist es möglich, beliebig viele verschiedene Teilbereiche vorzusehen.

Beim Betrachten einer Szenerie durch die optische Vorrichtung ist es sonach möglich, mit jeweils einem Auge durch den ersten Teilbereich und/oder durch den zweiten Teilbereich zu blicken, sodass die Szenerie durch die beiden unterschiedlich gefilterten Teilbereiche sichtbar ist. Dadurch wird besonders vorteilhafterweise erreicht, dass eine Adaptation des menschlichen Auges an die gefilterte Szenerie bzw. die entsprechenden durch die optische Filtereinrichtung veränderten Farbreize reduziert erfolgt bzw. das Auge nicht vollständig adaptiert. Dieselbe Szenerie kann quasi simultan mit demselben Auge durch den ersten und den zweiten Teilbereich betrachtet werden, sodass stets ein Vergleich zwischen dem gefilterten und dem ungefilterten (oder abweichend gefilterten) Farbreiz bzw. Transmissionsspektrum gegeben ist. Somit wird eine Adaptation des menschlichen Auges an den gefilterten Farbreiz reduziert erfolgen, sodass die Wirkung der optischen Filtereinrichtung auch bei längerer Betrachtung der Szenerie durch die optische Vorrichtung erhalten bleibt. Es soll noch einmal verdeutlicht werden, dass die Wirkung der Filtereinrichtung dabei auf ein Auge abzielt und die optische Filtereinrichtung demnach einem Auge zugeordnet ist, wobei die Szenerie demnach mit demselben Auge durch die unterschiedlichen Teilbereiche betrachtet wird. Selbstverständlich ist es möglich, dass die optische Vorrichtung jeweils eine Filtereinrichtung für jedes Auge aufweist.

Je nachdem durch welchen Teilbereich der Benutzer der optischen Vorrichtung die Szenerie betrachtet, wird die elektromagnetische Strahlung durch die optische Filtereinrichtung gefiltert oder nicht (oder abweichend), wodurch die Adaptation reduziert wird. Selbstverständlich werden bei der Aufteilung bzw. Anordnung der Teilbereiche nur optisch wirksame Bereiche berücksichtigt, die sich im montierten bzw. im in den Strahlengang eingebrachten Zustand auch wirksam im Strahlengang befinden. Das teilweise Aufbringen bzw. Einbringen von optischen Filtereinrichtungen aufgrund fertigungstechnischer Randbedingungen soll im Rahmen dieser Anmeldung unberücksichtigt bleiben. Insbesondere ist dabei eine optische Filtereinrichtung die fertigungsbedingt, beispielsweise aufgrund einer Halterung beim Aufbringen der optischen Filtereinrichtung, nur teilweise auf einem optischen Element aufgebracht ist, nicht als in wenigstens zwei Teilbereiche unterteilt im Sinne der Anmeldung zu verstehen. Die wenigstens zwei Teilbereiche im Sinne der Anmeldung müssen im montierten Zustand der optischen Filtereinrichtung bzw. des optischen Elements im Strahlengang der optischen Vorrichtung bzw. des optischen Elements liegen, wobei es dem Benutzer möglich sein muss, die Szenerie durch die wenigstens zwei Teilbereiche zu betrachten.

Besonders bevorzugt kann bei der optischen Vorrichtung vorgesehen sein, dass die optische Filtereinrichtung wenigstens zwei erste Teilbereiche mit unterschiedlichen Transmissionsspektren aufweist. Elektromagnetische Strahlung, die durch die unterschiedlichen Teilbereiche fällt, wird sonach unterschiedlich gefiltert. Die durch den zweiten Teilbereich fallende elektromagnetische Strahlung wird, wie zuvor beschrieben, nicht oder abweichend vom ersten Teilbereich gefiltert. In Abhängigkeit davon, durch welchen der wenigstens zwei Teilbereiche elektromagnetische Strahlung läuft, wird diese in Abhängigkeit des Transmissionsspektrums bzw. der darin vorhandenen Dämpfungsspektralbereiche gefiltert.

Gemäß einer bevorzugten Ausgestaltung der optischen Vorrichtung können wenigstens zwei Teilbereiche gleich groß sein und/oder die gleiche Form aufweisen. Dabei kann beispielsweise der Strahlengang durch die optische Vorrichtung hälftig geteilt sein. Es ist ebenso möglich, die optische Filtereinrichtung entlang wenigstens einer Teilungsachse, insbesondere horizontal oder vertikal, in den wenigstens einen ersten Teilbereich und den wenigstens einen zweiten Teilbereich aufzuteilen. Selbstverständlich ist das Vorsehen mehrerer erster und/oder mehrerer zweiter Teilbereiche möglich, die beliebig angeordnet sein können. Insbesondere können diese als parallel verlaufende Streifen horizontal oder vertikal nebeneinander angeordnet sein. Dabei ist besonders bevorzugt eine symmetrische Aufteilung in Bezug auf eine Achse, insbesondere eine senkrecht zur optischen Achse verlaufende Achse vorzusehen. Alternativ oder zusätzlich kann wenigstens ein Teilbereich linsenförmig bzw. oval ausgebildet sein.

Die optische Vorrichtung kann ferner dahingehend weitergebildet werden, dass die optische Filtereinrichtung folienartig oder als Folie ausgebildet oder als Beschichtung auf dem wenigstens einen optischen Element aufgebracht ist. Die optische Filtereinrichtung kann beispielsweise als separates Element als Folie bzw. folienartig ausgebildet sein und entsprechend in den Strahlengang der optischen Vorrichtung eingebracht werden. Dabei ist es möglich, die optische Filtereinrichtung zu tauschen bzw. selektiv zu montieren, wenn diese benötigt wird. Ebenso ist es möglich, die optische Filtereinrichtung als Beschichtung auf dem wenigstens einen optischen Element, also jeder beliebigen optisch wirksamen Oberfläche der optischen Vorrichtung, aufzubringen. Auch hierbei kann vorgesehen sein, die entsprechende optisch wirksame Fläche in den Strahlengang einzubringen bzw. aus diesem herauszunehmen.

Eine weitere Ausgestaltung der optischen Vorrichtung sieht vor, dass wenigstens ein Teilbereich wenigstens einer optischen Filtereinrichtung als Polarisationsfilter ausgebildet ist oder einen solchen umfasst. Ein derartiger Polarisationsfilter absorbiert oder reflektiert Licht einer bestimmten Polarisationsrichtung, sodass entsprechend der Transmissionscharakteristik des Polarisationsfilters das durch die optische Vorrichtung fallende Licht gefiltert werden kann. Insbesondere unerwünschte Reflexionen lassen sich durch einen derartigen Polarisationsfilter unterdrücken, sodass ein Überstrahlen von Bereichen der Szenerie durch die Reflexionen vermieden wird.

Selbstverständlich ist die optische Filtereinrichtung nicht auf eine Filterform beschränkt. Grundsätzlich kann ein bestimmter Anteil bzw. mehrere Anteile elektromagnetischer Strahlung in Abhängigkeit des wenigstens einen Dämpfungsspektralbereichs von der optischen Filtereinrichtung reflektiert, transmittiert oder absorbiert werden, sodass sich das entsprechende Transmissionsspektrum der optischen Filtereinrichtung einstellt. Beispielsweise kann auch ein teildurchlässiger Spiegel als optische Filtereinrichtung verstanden werden.

Besonders bevorzugt sind bei der optischen Vorrichtung wenigstens zwei optische Elemente vorgesehen, wobei jedem optischen Element wenigstens eine optische Filtereinrichtung zugeordnet ist, wobei eine Aufteilung und/oder eine Anordnung der Teilbereiche für die beiden optischen Elemente verschieden sind. Dabei ist jede beliebige Anordnung bzw. Aufteilung der Teilbereiche für die beiden optischen Elemente denkbar. Insbesondere kann jeweils wenigstens ein optisches Element einem Auge zugeordnet sein, wobei die Aufteilung bzw. die Anordnung der Teilbereiche spiegelbildlich bzw. für die beiden den jeweiligen Augen zugeordneten Elemente genau umgekehrt vorgesehen sein kann. Selbstverständlich ist jede beliebige andere Aufteilung bzw. Anordnung ebenso möglich.

Die Erfindung wird nachfolgend anhand von Ausführungsbeispielen unter Bezugnahme auf die Zeichnungen erläutert. Die Zeichnungen sind schematische Darstellungen und zeigen in:
Fig. 1 eine Betrachtung einer Szenerie durch eine optische Filtereinrichtung;
Fig. 2 ein Hintergrundreflektanzspektrum und ein Objektreflektanzspektrum;
Fig. 3 ein Transmissionsspektrum einer optischen Filtereinrichtung gemäß einem ersten Ausführungsbeispiel;
Fig. 4 ein Transmissionsspektrum einer optischen Filtereinrichtung gemäß einem zweiten Ausführungsbeispiel;
Fig. 5 eine optische Vorrichtung;
Fig. 6 eine Anordnung einer optischen Filtereinrichtung auf einem optischen Element gemäß einem ersten Ausführungsbeispiel;
Fig. 7 eine Anordnung einer optischen Filtereinrichtung auf einem optischen Element gemäß einem zweiten Ausführungsbeispiel;
Fig. 8 eine Anordnung einer optischen Filtereinrichtung auf einem optischen Element gemäß einem dritten Ausführungsbeispiel;
Fig. 9 eine Anordnung einer optischen Filtereinrichtung auf einem optischen Element gemäß einem vierten Ausführungsbeispiel; und
Fig. 10 eine Anordnung einer optischen Filtereinrichtung auf einem optischen Element gemäß einem fünften Ausführungsbeispiel.

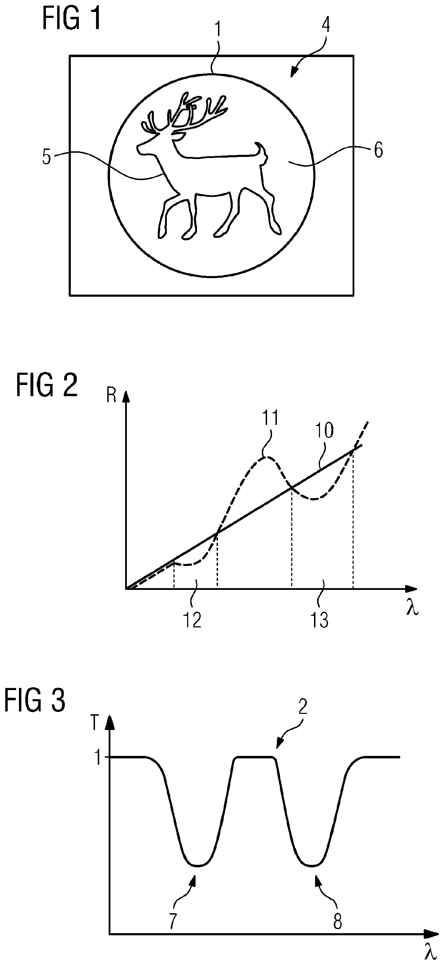

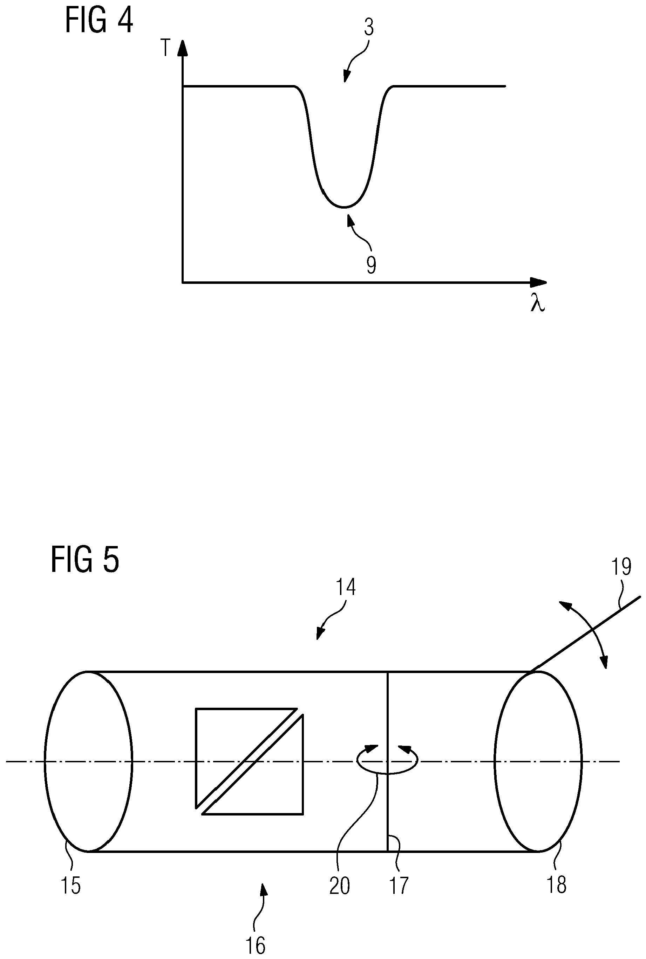

Fig. 1 zeigt eine optische Filtereinrichtung 1, die in Abhängigkeit eines Transmissionsspektrums 2, 3 (vgl. Fig. 3, 4) der optischen Filtereinrichtung 1 für elektromagnetische Strahlung durchlässig ist wobei die optische Filtereinrichtung 1 bei der Betrachtung einer Szenerie 4 aus einem Objekt 5 und einem Hintergrund 6 dazu ausgebildet ist, elektromagnetische Strahlung wenigstens eines Dämpfungsspektralbereichs 7 - 9 (vgl. Fig. 3, 4) zumindest teilweise zu filtern. Der wenigstens eine Dämpfungsspektralbereich 7 - 9 der optischen Filtereinrichtung 1 ist in Abhängigkeit eines für den Hintergrund 6 charakteristischen Hintergrundreflektanzspektrums 10 und eines für das Objekt 5 charakteristischen Objektreflektanzspektrums 11 festgelegt.

Die optische Filtereinrichtung 1 ist dazu ausgebildet, die Differenz zwischen dem Hintergrundreflektanzspektrum 10 und dem Objektreflektanzspektrum 11 zu verstärken. Bei der in Fig. 1 dargestellten Szenerie 4 handelt es sich beispielhaft um eine jagdliche Szene, bei der das Objekt 5, beispielweise Rotwild, vor einem Hintergrund 6, beispielweise Wald, betrachtet wird. Aufgrund der Betrachtung des Objekts 5 durch die optische Filtereinrichtung 1 bzw. einer optischen Vorrichtung, der die optische Filtereinrichtung 1 zugeordnet ist, werden die Differenzen zwischen dem Hintergrundreflektanzspektrum 10 und dem Objektreflektanzspektrum 11 verstärkt, sodass die Objektwahrnehmung des Objekts 5 vor dem Hintergrund 6 verbessert wird.

In Fig. 2 sind das Hintergrundreflektanzspektrum 10 und das Objektreflektanzspektrum 11 schematisch über der Wellenlänge aufgetragen. Die Spektren geben sonach an, welcher Anteil der elektromagnetischen Strahlung bei welcher Wellenlänge von dem Hintergrund 6 bzw. dem Objekt 5 reflektiert wird. Ersichtlich weisen das Hintergrundreflektanzspektrum 10 und das Objektreflektanzspektrum 11 Differenzen auf. Lediglich beispielhaft wurden sonach zwei Teilspektren 12, 13 der beiden Reflektanzspektren bestimmt, in denen diese Differenzen aufweisen. In Abhängigkeit der Teilspektren 12, 13 sind sonach zwei Dämpfungsspektralbereiche 7, 8 (vgl. Fig. 3) festgelegt. Fig. 3 zeigt dabei das Transmissionsspektrum 2 einer optischen Filtereinrichtung 1 gemäß einem ersten Ausführungsbeispiel. Ersichtlich entspricht der erste Dämpfungsspektralbereich 7 dem ersten Teilspektrum 12 und der zweite Dämpfungsspektralbereich 8 entspricht dem zweiten Teilspektrum 13. Durch Anwendung der optischen Filtereinrichtung 1 bzw. der Auslegung des Transmissionsspektrums können die Differenzen zwischen Hintergrundreflektanzspektrum 10 und Objektreflektanzspektrum 11 verstärkt werden.

In Fig. 4 ist das Transmissionsspektrum 3 für eine optische Filtereinrichtung 1 gemäß einem zweiten Ausführungsbeispiel dargestellt. Diese weist einen dritten Dämpfungsspektralbereich 9 auf, der in etwa dem Bereich zwischen dem Teilspektrum 12 und dem Teilspektrum 13 in Fig. 2 entspricht. Der Dämpfungsspektralbereich 9 kann beispielsweise der aufgrund des Chlorophylls schwerpunktmäßig reflektierten Wellenlänge bzw. dem zugeordneten Wellenlängenbereich angepasst sein. Der Dämpfungsspektralbereich 9 erstreckt sich beispielsweise von 525 nm bis 545 nm. Die Dämpfungsspektralbereiche 7 und 8 können sich beispielsweise zwischen 460 nm bis 530 nm und 590 nm bis 640 nm erstrecken.

Aufgrund der Filterung durch die optische Filtereinrichtung 1 verlagern sich die Farbörter des Objekts 5 und des Hintergrunds 6, sodass diese in einem Farbraum weiter auseinander liegen. Dies führt zu einer verbesserten Farbunterscheidungsfähigkeit seitens des Betrachters, sodass dieser das Objekt 5 und den Hintergrund 6 schneller differenzieren, das Objekt 5 also überhaupt erst oder zumindest schneller vor dem Hintergrund 6 erfassen kann.

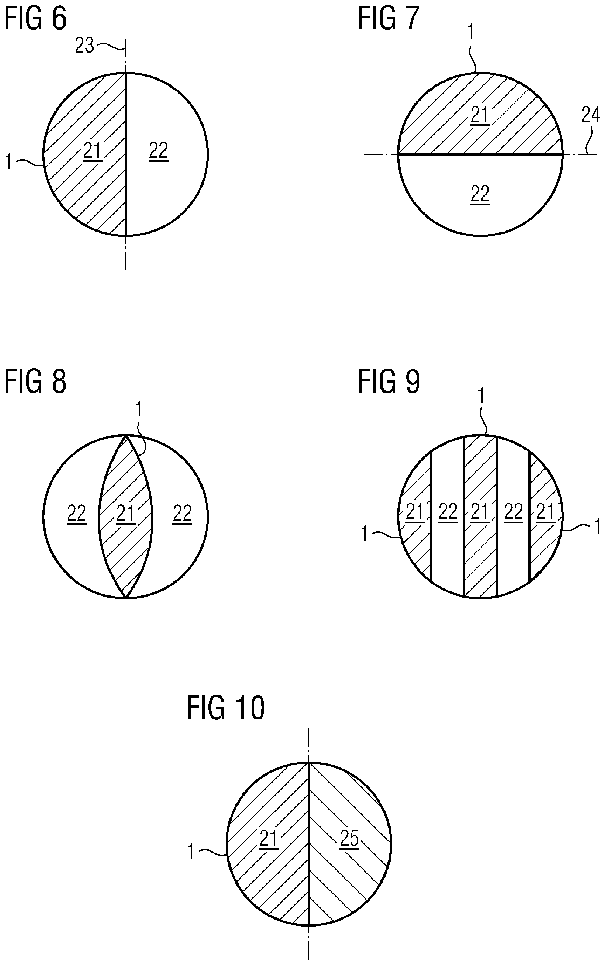

Fig. 5 zeigt eine optische Vorrichtung 14, die lediglich beispielhaft vier wirksame optische Elemente 15 - 19 aufweist. Ferner soll erwähnt werden, dass eine optische Filtereinrichtung 1, wie zuvor beschrieben, auf jedem der optischen Elemente 15 - 19 zumindest teilweise aufgebracht bzw. daran angeordnet oder als solches ausgebildet sein kann. Die optischen Elemente 15, 18 sind hierbei als Linsen ausgebildet, wobei eine optische Filtereinrichtung 1 teilweise, beispielsweise in Form einer der in den Fig. 6 bis 10 dargestellten Anordnungen, als Beschichtung auf die Linsen 15, 18 aufgebracht ist. Das optische Element 16 ist beispielweise als Strahlteilerprisma ausgebildet, wobei eine optische Filtereinrichtung 1 auf jeder der optisch wirksamen Flächen des optischen Elements 16 aufgebracht sein kann.

Das optische Element 17 ist beispielsweise als Strichplatte ausgebildet, wobei die optische Filtereinrichtung 1 auf dieser aufgebracht ist bzw. an dieser angeordnet ist. Insbesondere ist dabei möglich, auf einer Seite der Strichplatte ein Absehen und auf der anderen Seite die optische Filtereinrichtung 1 aufzubringen. Das optische Element 17 ist verschwenkbar in der optischen Vorrichtung 14 gelagert, was durch einen Doppelpfeil 20 dargestellt ist. Aufgrund der schwenkbaren Lagerung durch eine Schenkmechanik ist es möglich, das optische Element 17 und mit dem optischen Element 17 die ihm zugeordnete optische Filtereinrichtung 1 selektiv in den Strahlengang der optischen Vorrichtung 14 einzuschwenken und auszuschwenken.

Fig. 5 zeigt ferner, dass das optische Element 19 als in den Strahlengang der optischen Vorrichtung 14 einschwenkbares optisches Element ausgebildet ist, wobei dieses beispielsweise als Folie ausgebildet ist.

Fig. 6 zeigt eine optische Filtereinrichtung 1, die einen ersten Teilbereich 21 und einen zweiten Teilbereich 22 aufweist. Elektromagnetische Strahlung, die die optische Filtereinrichtung 1 in dem ersten Teilbereich 21 passiert, wird in Abhängigkeit des Transmissionsspektrums der optischen Filtereinrichtung 1 gefiltert. Elektromagnetische Strahlung, die hingegen die optische Filtereinrichtung 1 in dem zweiten Teilbereich 22 passiert, wird nicht gefiltert, da die optische Filtereinrichtung 1 in diesem Ausführungsbeispiel hälftig auf dem entsprechenden optischen Element 15 - 19 aufgebracht ist. Die Aufteilung erfolgt dabei entlang einer Symmetrieachse 23, die senkrecht zur optischen Achse verläuft und das optische Element 15 - 19 in den ersten Teilbereich 21 und den zweiten Teilbereich 22 vertikal halbiert.

Fig. 7 zeigt eine zu Fig. 6 ähnliche Darstellung, bei der die optische Filtereinrichtung 1 wiederum einen ersten Teilbereich 21 und einen zweiten Teilbereich 22 aufweist, wobei die beiden Teilbereiche 21, 22 dieselbe Größe und dieselbe Form aufweisen. Im Gegensatz zu der Darstellung in Fig. 6 ist das entsprechende optische Element 15 - 19, auf dem die optische Filtereinrichtung 1 aufgebracht ist durch eine Symmetrieachse 24 aufgeteilt, insbesondere in den ersten Teilbereich 21 und den zweiten Teilbereich 22 horizontal halbiert.

Fig. 8 zeigt eine optische Filtereinrichtung 1, die zwei zweite Teilbereiche 22 und einen ersten Teilbereich 21 aufweist. Der erste Teilbereich 21 ist dabei linsenförmig mittig der optischen Filtereinrichtung 1 angeordnet und wird von den beiden zweiten Teilbereichen 22 symmetrisch und komplementär umgeben.

Fig. 9 stellt eine optische Filtereinrichtung 1 dar, die drei erste Teilbereiche 21 und zwei zweite Teilbereiche 22 aufweist, die im Wesentlichen in Form vertikal verlaufender Streifen abwechselnd an der optischen Filtereinrichtung 1 angeordnet bzw. auf dieser aufgebracht sind. Selbstverständlich ist es ebenso möglich, mehrere Teilbereiche, also beispielsweise einen dritten und vierten Teilbereich vorzusehen, die sich hinsichtlich ihres Transmissionsspektrums unterscheiden.

Fig. 10 zeigt eine optische Filtereinrichtung 1, die einen ersten Teilbereich 21 und einen zweiten Teilbereich 25 aufweist. Der erste Teilbereich 21 unterscheidet sich dabei von dem zweiten Teilbereich 25 hinsichtlich wenigstens eines Dämpfungsspektralbereichs. Der erste Teilbereich 21 weist dabei einen ersten Dämpfungsspektralbereich und der zweite Teilbereich 25 einen von dem ersten Dämpfungsspektralbereich verschiedenen zweiten Dämpfungsspektralbereich auf.

Mit den optischen Filtereinrichtungen 1, die in den Fig. 6 bis 10 dargestellt sind, ist es insbesondere möglich, die Szenerie 4 durch die unterschiedlichen Teilbereiche 21, 22, 25 zu betrachten, sodass eine Adaptation des menschlichen Auges reduziert oder verhindert wird. Dadurch bleiben die durch die optische Filtereinrichtung 1 erzeugten Farbeindrücke bestehen und werden nicht oder nur geringfügig durch die Adaptation herausadaptiert. Ferner ist es möglich, die Szenerie 4 mittels der optischen Filtereinrichtung 1 abzustreifen, sodass das Objekt 5 und der Hintergrund 6 einmal durch einen ersten Teilbereich 21 und einmal durch einen zweiten Teilbereich 22 betrachtet wird. Dadurch fallen die Unterschiede durch die unterschiedlichen Filterungen stärker auf bzw. werden durch den direkten Vergleich stärker wahrgenommen. Insbesondere können die in den Fig. 6, 8 oder 9 dargestellten optischen Filtereinrichtungen 1 horizontal relativ zur Szenerie verschoben werden, wohingegen die in Fig. 7 dargestellte optische Filtereinrichtung 1 vertikal verschoben werden kann, um durch die verschiedenen Teilbereiche 21, 22 die Szenerie 4 abzustreifen bzw. "abzuscannen".

Ferner soll noch einmal verdeutlicht werden, dass etwaige Ränder bzw. andere fertigungsbedingt entstehende Bereiche, in denen das Aufbringen einer optischen Filtereinrichtung 1 lediglich durch den Herstellungsprozess bedingt ausbleibt oder ausbleibt, weil der entsprechende Bereich nicht im Strahlengang angeordnet wird, nicht als Teilbereiche im Sinne der Anmeldung verstanden werden. Selbstverständlich sind sämtliche in den einzelnen Ausführungsbeispielen gezeigten Vorteile und Einzelheiten beliebig untereinander kombinierbar bzw. austauschbar. Insbesondere ist eine optische Vorrichtung 14 mit verschiedenen optischen Filtereinrichtungen 1 auf verschiedene optischen Elementen 15 - 19 realisierbar.

### BEZUGSZEICHENLISTE

1 Optische Filtereinrichtung
2 Transmissionsspektrum
3 Transmissionsspektrum
4 Szenerie
5 Objekt
6 Hintergrund
7 Dämpfungsspektralbereich
8 Dämpfungsspektralbereich
9 Dämpfungsspektralbereich
10 Hintergrundreflektanzspektrum
11 Objektreflektanzspektrum
12 Teilspektrum
13 Teilspektrum
14 Optische Vorrichtung
15 Optisches Element
16 Optisches Element
17 Optisches Element
18 Optisches Element
19 Optisches Element
20 Doppelpfeil
21 Teilbereich
22 Teilbereich
23 Symmetrieachse
24 Symmetrieachse
25 Teilbereich

## Patentansprüche

1. Optische Filtereinrichtung (1), die in Abhängigkeit eines Transmissionsspektrums (2, 3) der optischen Filtereinrichtung (1) für elektromagnetische Strahlung durchlässig ist, wobei die optische Filtereinrichtung (1) bei der Betrachtung einer Szenerie (4) aus einem Objekt (5) und einem Hintergrund (6) dazu ausgebildet ist, elektromagnetische Strahlung wenigstens eines Dämpfungsspektralbereichs (7 - 9) zumindest teilweise zu filtern, **dadurch gekennzeichnet, dass** der wenigstens eine Dämpfungsspektralbereich (7 - 9) der optischen Filtereinrichtung (1) in Abhängigkeit eines für einen bestimmten Hintergrund (6) charakteristischen Hintergrundreflektanzspektrums (10) und eines für ein bestimmtes Objekt (5) charakteristischen Objektreflektanzspektrums (11) festgelegt ist, wobei die optische Filtereinrichtung (1) dazu ausgebildet ist, eine Differenz zwischen Hintergrundreflektanzspektrum (10) und Objektreflektanzspektrum (11) in wenigstens einem Teilspektrum (12, 13) des Transmissionsspektrums (2, 3) zu verstärken.

2. Optische Filtereinrichtung nach Anspruch 1, **dadurch gekennzeichnet, dass** die optische Filtereinrichtung (1) dazu ausgebildet ist, von dem Hintergrund (6) reflektiertes Licht und/oder von dem Objekt (5) reflektiertes Licht derart zu verändern, dass ein Abstand eines ersten Farborts des von dem Hintergrund (6) reflektierten Lichts von einem zweiten Farbort des von dem Objekt (5) reflektierten Lichts in einem Farbraum bei gegebener Beleuchtung nach der Filterung erhöht ist.

3. Optische Filtereinrichtung nach Anspruch 1 oder 2, **dadurch gekennzeichnet, dass** der wenigstens eine Dämpfungsspektralbereich (7 - 9) schmalbandig ist, vorzugsweise zwischen 5nm und 50nm.

4. Optische Filtereinrichtung nach einem der vorangehenden Ansprüche, **dadurch gekennzeichnet, dass** sie einen ersten Dämpfungsspektralbereich (9) von 525nm bis 545nm oder einen ersten Dämpfungsspektralbereich (7) von 460nm bis 530nm und einen zweiten Dämpfungsspektralbereich (8) von 590nm bis 640nm aufweist.

5. Optische Vorrichtung (14) mit wenigstens einem optischen Element (15 - 19) und wenigstens einer optischen Filtereinrichtung (1) nach einem der vorangehenden Ansprüche.

6. Optische Vorrichtung nach Anspruch 5, **dadurch gekennzeichnet, dass** wenigstens eine optische Filtereinrichtung (1) okularseitig und/oder objektivseitig und/oder auf einem Strahlteiler und/oder auf einer Strichplatte angeordnet ist.

7. Optische Vorrichtung nach Anspruch 5 oder 6, **dadurch gekennzeichnet, dass** wenigstens zwei optische Filtereinrichtungen (1) vorgesehen sind, die untereinander austauschbar sind.

8. Optische Vorrichtung nach einem der Ansprüche 5 bis 7, **dadurch gekennzeichnet, dass** wenigstens eine optische Filtereinrichtung (1) selektiv in den Strahlengang des wenigstens einen optischen Elements (15 - 19) einbringbar ist.

9. Optische Vorrichtung nach einem der Ansprüche 5 bis 8, **dadurch gekennzeichnet, dass** wenigstens eine optische Filtereinrichtung (1) in den Strahlengang des wenigstens einen optischen Elements (15 - 19), insbesondere mittels einer Schenkmechanik, einschwenkbar ist.

10. Optische Vorrichtung (14) nach einem der Ansprüche 5 bis 9, **dadurch gekennzeichnet, dass** das optische Element (15 - 19) wenigstens einen ersten Teilbereich (21) und wenigstens einen zweiten Teilbereich (22, 25) aufweist, wobei elektromagnetische Strahlung durch das optische Element (15 - 19) in dem wenigstens einen ersten Teilbereich (21) mittels der wenigstens einen optischen Filtereinrichtung (1) oder in Abhängigkeit wenigstens eines ersten Dämpfungsspektralbereichs (7- 9) der optischen Filtereinrichtung (1) gefiltert ist und elektromagnetische Strahlung durch das optische Element (15 - 19) in dem wenigstens einen zweiten Teilbereich (22, 25) nicht mittels der optischen Filtereinrichtung (1) oder in Abhängigkeit wenigstens eines zweiten Dämpfungsspektralbereichs (15 - 19) der optischen Filtereinrichtung (1) mittels der optischen Filtereinrichtung (1) gefiltert ist.

11. Optische Vorrichtung nach Anspruch 10, **dadurch gekennzeichnet, dass** die optische Filtereinrichtung (1) wenigstens zwei erste Teilbereiche (21, 25) mit unterschiedlichen Transmissionsspektren (2, 3) aufweist.

12. Optische Vorrichtung nach Anspruch 10 oder 11, **dadurch gekennzeichnet, dass** wenigstens zwei Teilbereiche (21, 22, 25) gleich groß sind und/oder die gleiche Form aufweisen.

13. Optische Vorrichtung nach einem der Ansprüche 10 bis 12, **dadurch gekennzeichnet, dass** die optische Filtereinrichtung (1) entlang wenigstens einer Teilungsachse (24, 25), insbesondere horizontal oder vertikal, in den wenigstens einen ersten Teilbereich (21, 25) und den wenigstens einen zweiten Teilbereich (22) aufgeteilt ist.

14. Optische Vorrichtung nach einem der Ansprüche 10 bis 13, **dadurch gekennzeichnet, dass** wenigstens ein Teilbereich (21, 22, 25) symmetrisch in Bezug auf eine Achse (24, 25), insbesondere eine Achse senkrecht zur optischen Achse, ausgebildet ist.

15. Optische Vorrichtung nach einem der Ansprüche 10 bis 14, **dadurch gekennzeichnet, dass** wenigstens ein Teilbereich (21, 22, 25) linsenförmig ist.

16. Optische Vorrichtung nach einem der Ansprüche 10 bis 15, **dadurch gekennzeichnet, dass** die optische Filtereinrichtung (1) folienartig oder als Folie ausgebildet oder als Beschichtung auf dem wenigstens einen optischen Element (15 - 19) aufgebracht ist.

17. Optische Vorrichtung nach Anspruch 11 bis 16, **dadurch gekennzeichnet, dass** wenigstens ein Teilbereich (21, 22, 25) wenigstens einer Filtereinrichtung (1) als Polarisationsfilter ausgebildet ist oder einen solchen umfasst.

18. Optische Vorrichtung nach einem der Ansprüche 11 bis 17, **dadurch gekennzeichnet, dass** wenigstens zwei optische Elemente (15 - 19) vorgesehen sind, wobei jedem optischen Element (15 - 19) wenigstens eine optische Filtereinrichtung (1) zugeordnet ist, wobei eine Aufteilung und/oder eine Anordnung der Teilbereiche (21, 22, 25) für die beiden optischen Elemente (15 - 19) verschieden sind.
